# EUROPEAN PATENT APPLICATION

(11) **EP 2 898 870 A1**
(43) Date of publication of application: **29.07.2015**
(21) Application number: 13838440.9
(22) Date of filing: 11.09.2013
(51) Int. Cl.: A61J 1/03, A61J 1/10, B32B 9/00, B65D 65/40, B65D 81/26

(54) **DRUG PACKAGING SHEET AND DRUG-PACKAGED PRODUCT**

(30) Priority: 19.09.2012 JP 2012206255; 09.01.2013 JP 2013002047
(71) Applicant: SUMITOMO BAKELITE CO., LTD., Tokyo 140-0002 (JP)
(72) Inventor: FUKUI, Udai, Tokyo 140-0002 (JP)
(74) Representative: Schnappauf, Georg
(86) International application number: PCT/JP2013/074517
(87) International publication number: WO 2014/045964

(57) **Abstract**

One object of the present invention is to provide a medicine packaging sheet, and a medicine package, which do not need to enclose an oxygen absorbent in the package in addition to add the oxygen absorbent in the package material, and which have excellent oxygen absorbing properties and oxygen barrier properties. The present invention provides a medicine packaging sheet including a barrier layer and an oxygen absorbing layer, wherein the oxygen absorbing layer is composed of a resin composition including a base resin, an oxygen absorbing resin, and a reaction accelerator.

## Description

### TECHNICAL FIELD

The present invention relates to a medicine packaging sheet and a medicine package. In particular, the present invention relates to a medicine packaging sheet used for medicines, cosmetics, food, etc., and a medicine package. More specifically, the present invention relates to a medicine packaging sheet which can shutoff moisture, oxygen, and light, and has oxygen absorbing performance, and a medicine package.

In the description, examples of the medicine include liquid medicines (liquid medicines for internal use, liquid medicines for external use), extracts, fluid extracts, suspensions, emulsions, jelly-form medicines, pasting medicines, cataplasm, tapes, blaster (plaster), external preparation, transdermal absorption (type) preparation, syrups, infusions, decoctions, gels, creams, ointments, aromatic waters, elixirs, aerosols, sprays, spirits, lotions, liniments, Rimotazes, injections, eye ointments, eye lotions, tinctures, poultices, and related medicines containing medical ingredients.

In addition, the package has any shapes, and examples of the shape include a pillow package, a SP (strip) package, a unit-dose package, a stick package, a pouch package, a standing pouch package, and one parcel of package.

Priority is claimed on Japanese Patent Application No. 2012-206255 filed on September 19, 2012, and Japanese Patent Application No. 2013-002047 filed on January 9, 2013, the content of which is incorporated herein by reference.

### BACKGROUND ART

As a package for storing medicines, cosmetics, food, etc., a plastic package or a plastic package in which an aluminum foil is laminated on a film has been used.

When medicines, cosmetics, foods, etc. are packaged with such a package, an active ingredient such as medicine may be oxidized and deteriorated by oxygen which is remained inside of the package or oxygen which is penetrated from the outside. In addition, the active ingredient may be hydrolyzed by water vapor penetrating from the outside of the package.

In order to solve the problems, for example, Patent Document 1 suggests to put an oxygen absorbent inside of the package, and reduce the oxygen in the package. However, insertion of the oxygen absorbent is troublesome, the package is bulky, disposal thereof may be problematic, and accidental ingestion may also be a problem.

In addition, Patent Document 2 discloses a package including an oxygen absorbing layer containing an oxygen absorbent, a gas barrier layer containing a gas barrier material, and a heat seal layer.

However, an iron powder-based deoxidation composition is used as the oxygen absorbent in the package. Therefore, in a case of kneading a thermoplastic resin, when a large amount of the iron powder-based deoxidation composition is added in the thermoplastic resin, the degradation of the thermoplastic resin is promoted, a problem with odor is caused, and the mechanical strength is reduced. In addition, the mechanical strength is reduced depending on the particle size of the oxygen absorbent.

On the other hand, since there is a possibility that children will be able to easily open a package without notches (recesses, indentations), it is necessary to increase the child resistance (child-proofness) thereof. However, in a package with a reduced mechanical strength such as tear strength, there is a problem in that it is difficult to improve the child resistance (child-proofness) thereof.

Furthermore, in order to produce the oxygen absorbing performance of the oxygen adsorbent, a certain amount of water is necessary as a trigger. Therefore, depending on the water content inside the package, sufficient oxygen absorbing performance will not be exhibited.

### PRIOR ART DOCUMENT

### PATENT DOCUMENT

Patent Document 1: Japanese Unexamined Patent Application, First Publication No. 2007-254423
Patent Document 2: Japanese Unexamined Patent Application, First Publication No. 2001-120642

### DISCLOSURE OF THE INVENTION

### PROBLEMS TO BE SOLVED

The object of the present invention is to provide a medicine packaging sheet including an oxygen absorbing layer containing an oxygen absorbing resin, which does not need to enclose an oxygen absorbent in the package in addition to add the oxygen absorbent in the package material, and which has excellent oxygen absorbing properties and oxygen barrier properties, and a medicine package.

### MEANS FOR SOLVING THE PROBLEM

The object can be achieved by the following inventions (1) to (6) below.
(1) A medicine packaging sheet including a barrier layer and an oxygen absorbing layer, wherein the oxygen absorbing layer is composed of a resin composition including a base resin, an oxygen absorbing resin, and a reaction accelerator.
(2) The medicine packaging sheet according to (1), wherein the barrier layer includes at least one selected from the group consisting of aluminum, aluminum oxide, and silicon oxide.
(3) The medicine packaging sheet according to (1) or (2), wherein the resin composition includes 1 to 80% by weight of the oxygen absorbing resin.
(4) The medicine packaging sheet according to any one of (1) to (3), wherein the content of the reaction accelerator in the resin composition is in a range of 100 ppm to 10,000 ppm.
(5) The medicine packaging sheet according to any one of (1) to (4), wherein the medicine packaging sheet further includes a seal layer.
(6) A medicine package including the medicine packaging sheet according to any one of (1) to (5).

### EFFECTS OF THE PRESENT INVENTION

According to the present invention, it is possible to provide a medicine packaging sheet having excellent oxygen absorbing properties and oxygen barrier properties, and a medicine package.

Even when an amount of an antioxidant which is generally put into the package is reduced or when an antioxidant is absent inside the package, since the medicine packaging sheet has oxygen absorbing properties, it is possible to inhibit the oxidation of medicine.

Compared with a case in which an inorganic oxygen absorbent is used, it is possible to maintain the mechanical strength, such as the tear strength by using an organic oxygen absorbent. Therefore, the medicine package sheet of the present invention can also be used to improve the child resistance thereof (make it more child proof).

### BRIEF DESCRIPTION OF THE DRAWINGS

FIG. 1 is a cross-sectional view showing one embodiment of the medicine packaging sheet of the present invention.
FIG. 2 is a cross-sectional view showing one embodiment of the medicine packaging sheet of the present invention.
FIG. 3 is a cross-sectional view showing one embodiment of the medicine packaging sheet of the present invention.
FIG. 4 is a view for explaining a method for measuring an amount of oxygen absorbed in the medicine packaging sheet.

### DESCRIPTION OF EMBODIMENTS

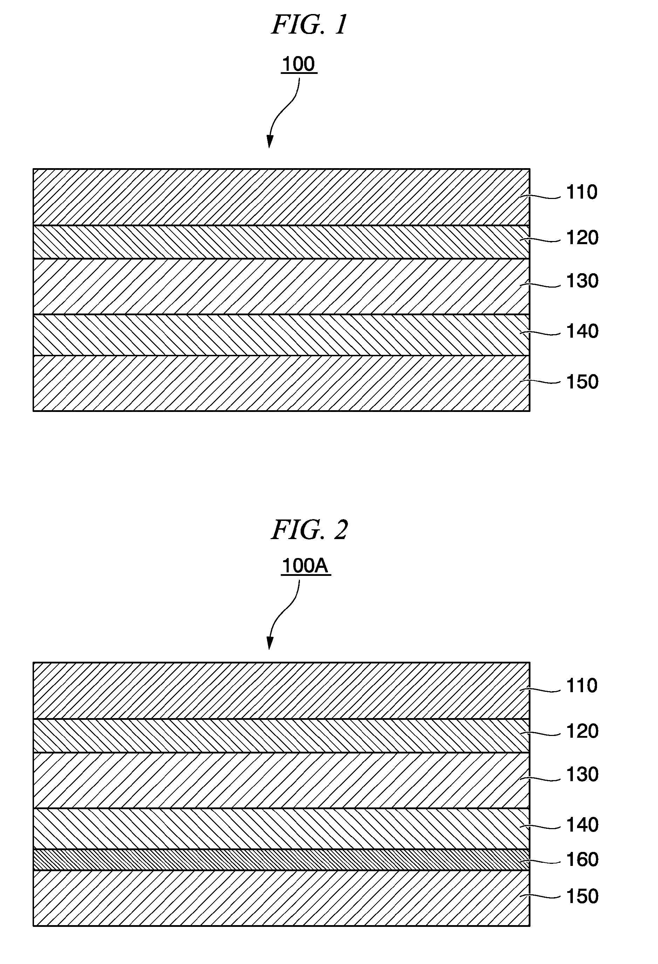

One embodiment of the medicine packaging sheet according to the present invention is explained in detail with reference to figures. Moreover, "upper" and "lower" in Figs. 1 to 4 are denoted by "upper" and "lower" in the following description.

A medicine packaging sheet 100 shown in Fig. 1 includes a barrier layer 120, an oxygen absorbing layer 140, an outer layer 110, an adhesive layer 130, and a seal layer 150.

Below, the configuration of each component of the medicine packaging sheet 100 will be sequentially explained.

### (Barrier layer 120)

The barrier layer 120 mainly has oxygen barrier properties. In the medicine package including the medicine packaging sheet 100, the barrier layer 120 protects the penetration of oxygen inside the medicine package.

The barrier layer is not particularly limited as long as it has oxygen barrier properties. However, for example, a barrier resin having oxygen barrier properties may be formed in a film shape, or a film coated with a barrier resin may be used.

The barrier resin is not particularly limited as long as it has oxygen barrier properties. However, examples of the barrier resin include polyvinyl alcohol resins, ethylene-vinyl alcohol copolymer resins, ethylene-vinyl alcohol copolymer resins containing an oxygen absorbing resin, polyamide resins containing a diamine component having an aromatic ring, for example, NYLON ® such as MXD6, polyamide resins containing an oxygen absorbing resin, polyacrylonitryl resins, polyvinyl chloride resins, and polyester resins containing an oxygen absorbing resin.

The barrier resin may be stretched, or composited by laminating another resin, or adding a filler if necessary as long as the oxygen barrier properties are not impaired. As the filler, a composite material containing an inorganic layered compound such as montmorillonite is preferably used.

In addition, examples of the film coated with the barrier resin include a film coated with a polyvinyl alcohol-based resin, such as polyvinyl alcohol, a film coated with a polyacrylic acid-based resin, and a film coated with a poly chloride-based resin, such as polyvinylidene chloride. Examples of the base film to be coated with the barrier resin include stretched or unstretched films made of a polyester resin, a polyamide resin, or a polyolefin resin.

In addition, it is preferable that the barrier layer 120 contain a barrier material having gas barrier properties. Thereby, it is possible to provide moisture barrier properties, light blocking properties, and oxygen barrier properties to the barrier layer 120.

The barrier material is not particularly limited. Examples of the barrier material include light metals, such as aluminum (Al), an aluminum alloy, and aluminum oxide (alumina), silicon oxide, iron, tin, copper, zirconium oxide, magnesium oxide, titanium oxide. Among these, any one or more selected from aluminum, aluminum oxide, and silicon oxide is more preferable.

Thus, the oxygen barrier properties of the barrier layer 120 are further improved. In addition, since the moisture barrier properties are imparted to the barrier layer 120, it is possible to prevent the alteration or the deterioration of the content by gas such as oxygen and water vapor in the medicine package including the medicine packaging sheet 100.

When the barrier layer 120 contains the barrier material, the form of the barrier layer 120 is not particularly limited as long as the barrier layer 120 contains the barrier material. Examples of the barrier layer 120 include metal foils, inorganic vapor deposition films, and films coated with the barrier material. In particular, metal foils, inorganic vapor deposition films are preferable from the viewpoint of the protection of the content.

The metal foil constituting the barrier layer 120 is not particularly limited as long as it contains the barrier material. However, examples of the metal foil include light metal foils such as aluminum foils, and aluminum alloy foils, and steel foils such as iron foils, tin foils, and surface-treated copper foils. Among these, aluminum foils are preferable from the viewpoint of the versatility and the cost.

Thus, since the moisture barrier properties and the light blocking properties are imparted to the barrier layer 120, it is possible to suppress the increase of moisture inside the package, and the irradiation of light to the content, and therefore, the alteration or the deterioration of the content of the medicine package including the medicine packaging sheet 100 can be prevented.

The inorganic deposition film constituting the barrier layer 120 is not particularly limited. However, it is preferable that the barrier material be adhered to a base film, for example, by deposition. In this case, the barrier material is preferably the barrier material mentioned above.

The base film in this case is not particularly limited. For example, stretched or unstretched films made of a polyester resin such as polyethylene terephthalate (PET), a polyamide resin such as NYLON ®, or polyvinyl alcohol can be used as the base film.

In general, polyethylene terephthalate is preferably used when it is desired to have the elastic modulus (firmness), and the heat resistance, and NYLON ® (in particular, stretched NYLON ®) is preferably used when it is desirable to have the pin puncture strength, and the pinhole resistance. In addition, a polyvinyl alcohol resin is preferably used for a high barrier substrate.

Thus, it is possible to further suppress the increase of moisture inside the package, and the irradiation of light to the content, and therefore, the alteration or the deterioration of the content of the medicine package including the medicine packaging sheet 100 can be prevented.

The thickness of the barrier layer 120 is not particularly limited. However, the thickness of the barrier layer 120 is preferably in a range of 5 µm to 200 µm, more preferably in a range of 7 µm to 50 µm. When the thickness of the barrier layer 120 is less than the lower limit of the range, desired oxygen barrier properties may not be obtained or a problem may be caused in the pinhole resistance. In contrast, when the thickness is more than the upper limit of the range, the sealing properties may be insufficient.

### (Oxygen absorbing layer 140)

In the medicine package including the medicine packaging sheet 100, the oxygen absorbing layer mainly absorbs oxygen in the medicine package, and prevents the alternation or the deterioration of the content in combination with the oxygen barrier properties of the barrier layer 120.

In the medicine packaging sheet 100, the oxygen absorbing layer 140 is formed of a resin composition including a base resin, an oxygen absorbing resin, and a reaction accelerator.

The strength of the medicine packaging sheet 100 or the medicine package including the medicine packaging sheet 100 is improved by containing the base resin in the oxygen absorbing layer 140. Due to this, it is possible to prevent a problem of unintended rupture and the like during the transportation or the manufacture of the medicine package.

In addition, the oxygen inside the medicine package can be removed efficiently within a short time by containing the oxygen absorbing resin in the oxygen absorbing layer 140. Furthermore, sufficient oxygen absorbing performance can be achieved by containing the reaction accelerator in the oxygen absorbing layer 140.

In the resin composition constituting the oxygen absorbing layer 140, the content of the oxygen absorbing resin is not particularly limited. However, the content of the oxygen absorbing resin with respect to the total resin composition is preferably in a range of 1 % by weight to 80% by weight, and more preferably in a range of 5% by weight to 60% by weight.

When the amount of the oxygen absorbing resin in the resin composition is less than the lower limit of the range, sufficient oxygen absorbing performance may not be obtained. In contrast, when the content is more than the upper limit of the range, a problem of handling in the manufacturing process may be caused or the strength of the medicine package may be reduced.

The oxygen absorbing resin is not particularly limited. However, for example, unsaturated polyolefin-based oxygen absorbing resins, and so on can be used. Specifically, examples of the unsaturated polyolefin-based oxygen absorbing resin include ethylene-based unsaturated hydrocarbon polymers, ethylene main chain unsaturated hydrocarbon polymers, polyether unit polymers, copolymers including ethylene and deformed cyclic alkylene, polyamide resins, acid modified polybutadiene, hydroxyaldehyde polymers, polyisoprenes, styrene-butadiene copolymers, and styrene-isoprene copolymers. These resins can be used alone or in combination.

The reaction accelerator is not particularly limited. For example, radical generators, photocatalysts, and transition metal compounds can be used as the reaction accelerator. These reaction accelerators can be used alone or in combination. Among these, the transition metal compounds are preferable. The reactivity between the polymer having an unsaturated bond and oxygen can be improved by containing the transition metal compound. The oxygen can be efficiently removed within a short time by increasing the reactivity in this manner. Thus, the storage ability of the content of the medicine package can be further improved.

The transition metal compound is not particularly limited. Examples of the transition metal compound include zinc stearate, cobalt stearate, cobalt naphthenate, zinc naphthenate, zinc acetylacetonate, cobalt acetylacetonate, and copper acetylacetonate.

The content of the reaction accelerator is not particularly limited. However, the weight ratio of the reaction accelerator with respect to the total resin composition is preferably in a range of 100 ppm to 10,000 ppm, more preferably in a range of 300 ppm to 5,00 ppm, still more preferably in a range of 500 ppm to 5,000 ppm, still more preferably in a range of 700 ppm to 5,000 ppm, and most preferably in a range of 1,000 ppm to 5,000 ppm.

When the amount of the reaction accelerator is equal to the lower limit of the range or more, sufficient oxygen absorbing performance can be achieved. In contrast, when the content is equal to the upper limit of the range or less, it is possible to suppress the coloration by the reaction accelerator.

The base resin is not particularly limited. Examples of the base resin include polyamide-based resins, polyethylene-based resins, polypropylene-based resins, and polyester-based resins. These base resins can be used alone or in combination thereof. It is possible to increase the strength of the medicine packaging sheet 100 by containing the base resin.

The amount of the base resin is not particularly limited. However, the weight ratio of the base resin with respect to the total resin composition is preferably in a range of 20% by weight to 99% by weight, and more preferably in a range of 40% by weight to 95% by weight.

When the amount of the base resin is equal to the lower limit of the range or more, the dispersibility of the oxygen absorbing resin and the reaction accelerator is improved. In contrast, when the amount is equal to the upper limit of the range or less, sufficient oxygen absorbing performance can be obtained.

The oxygen absorbing layer 140 may contain an antioxidant. When the oxygen absorbing layer 140 contains an antioxidant, well-known antioxidants, such as hindered phenol-based antioxidants, phosphorus-based antioxidants, or thioether-based antioxidants can be used. These antioxidants can be used alone or in combination thereof.

The weight ratio of the antioxidant in the oxygen absorbing layer 140 with respect to the total resin composition is preferably 170 ppm or less, more preferably in a range of 5 ppm to 120 ppm, and most preferably in a range of 35 ppm to 60 ppm. When the amount of the antioxidant is in the range above, sufficient oxygen absorbing performance can be achieved.

In addition, the oxygen absorbing layer 140 may contain additives, compatibilizers, etc. as long as the physical properties are not impaired. The oxygen absorbing reaction can be promoted by containing the additives.

The thickness of the oxygen absorbing layer 140 is not particularly limited. However, the thickness of the oxygen absorbing layer 140 is preferably in a range of 3 µm to 100 µm, and more preferably in a range of 5 µm to 50 µm.

When the thickness of the oxygen absorbing layer 140 is equal to the lower limit of the range or more, sufficient oxygen absorbing performance can be obtained, and the oxygen content inside the medicine package can be reduced in a case of making the medicine package using the medicine packaging sheet. In contrast, when the thickness of the oxygen absorbing layer 140 is equal to the upper limit of the range or less, it is possible to improve the moldability of the medicine packaging sheet 100.

### (Seal layer 150)

The medicine packaging sheet 100 may include a seal layer 150 on the outermost layer of the lower surface.

It is possible to seal (heat seal, ultrasonic seal, high frequency seal, impulse seal, etc.) between the medicine packaging sheets 100 and 100 or the medicine packaging sheet 100 and another member by including the seal layer 150 in the medicine packaging sheet 100, and thereby the medicine package can be produced.

The material of the seal layer 150 is not particularly limited as long as it does not give adverse effects to the content of the medicine package. However, materials, which do not inhibit the oxygen absorbing properties, have the seal performance, and the non-absorbing properties to the medicine as the content, are preferable. Examples of the material of the seal layer 150 include low density polyethylene (LDPE) resins, linear low density polyethylene (LLDPE) resins, medium density polyethylene (MDPE) resins, high density polyethylene (HDPE) resins, polypropylene (PP) resins, ethylene-vinyl acetate copolymer (EVA) resins, ethylene-methyl methacrylate copolymer (EMMA) resins, ethylene-ethyl acrylate copolymer (EEA) resins, ethylene-methyl acrylate copolymer (EMA) resins, ethylene-ethyl acrylate-maleic anhydride copolymer (E-EA-MAH) resins, ethylene-acrylate copolymer (EAA) resins, ethylene-methacrylic acid copolymer (EMAA) resins, ionomer (ION) resins, polyvinyl alcohol resins, ethylene-vinyl alcohol copolymer resins (hereinafter referred to as "EVOH resins"), polyvinylidene chloride resins, polyamide resins having an aromatic ring in a diamine component, polyacrylonitrile resins (PAN), cyclic olefin copolymer resins, cyclic polyolefin sulfone-based resins, polyethylene terephthalate (PET) resins, and polycarbonate (PC) resins. These resins can be used alone or in combination.

Depending on the affinity between the resin and a particular component of the medicine, there is a possibility that adsorption (absorption, migration, dissolution, and diffusion) of the particular component of the medicine into the resin may occur. In this case, it is possible to retain the particular component of the medicine by using a so-called non-absorbing resin such as PAN, and EVOH. The thickness of the seal layer 150 containing the non-absorbing resin is not particularly limited as long as the seal layer has the non-absorbing properties and little influence on the oxygen absorbing performance. However, the thickness is preferably in a range of 0.3 µm to 30 µm, more preferably in a range of 0.5 µm to 10 µm, and most preferably in a range of 0.5 µm to 5µm.

The seal layer 150 may contain an antioxidant. When the seal layer 150 contains an antioxidant, well-known antioxidants, such as hindered phenol-based antioxidants, phosphorus-based antioxidants, and thioether-based antioxidants can be used. These antioxidants can be used alone or in combination.

The seal layer 150 may also contain a deodorant. As the deodorant, both chemical deodorants and physical deodorants can be used.

The chemical deodorant is not particularly limited. For example, well-known substances which chemically adsorb an odor-causing substance are used as the chemical deodorant. The chemical deodorant can be selected depending on the kind of odor-causing material to be adsorbed. Specifically, when the odor-causing substance to be adsorbed is aldehyde, an amine-based compound carrying silicon dioxide, a complex between an amine-based organic compound and a silicate-based inorganic compound, or layered phosphate holding an amino compound between the layers can be used. In addition, when the odor-causing substance to be adsorbed is an acid, a hydroxyl group carrying zirconium, aluminosilicate, or a hydroxyl group carrying zinc oxide can be used.

The physical deodorant is not particularly limited, and for example, activated carbon, activated clay, cyclodextrin, or aluminosilicates can be used.

The deodorant is added in a well-known binder resin by blending in a master batch method when the seal layer 150 is melt extruded.

The thickness of the seal layer 150 is not particularly limited. However, the thickness is preferably in a range of 0.3 µm to 200 µm, and more preferably in a range of 5 µm to 30 µm. When the thickness of the seal layer 150 is equal to the lower limit of the range or more, sufficient sealing properties can be obtained. In contrast, when the thickness is equal to the upper limit of the range or less, problems such as bleed out of the seal layer can be prevented.

### (Outer layer 110)

The medicine packaging sheet 100 includes an outer layer 110 on the outermost layer of the upper surface. It is possible to impart the heat resistance, the scratch resistance, the stab resistance, the tear resistance, the gloss, the printability, the child resistance (child-proofness) to the medicine packaging sheet 100 by including the outer layer 110 in the medicine packaging sheet 100.

The material of the outer layer 110 is not particularly limited. For example, olefin resins such as polyester resins, cellulose resins, low density polyethylene resins, high density polyethylene resins, and polypropylene resins, polyamide resins, vinyl resins, cellophanes, papers, and so on are preferably used.

In particular, olefin-based resin films, NYLON® films, polyester-based resin films, which are stretched uniaxially or biaxially, are preferably used.

In particular, when the child resistance (child-proofness) is considered, the tear resistance (in accordance with JIS K7128-3) in the MD direction (flow direction of the film) and the TD direction (the vertical direction or width direction of the film) is preferably 500 N/cm or more, and more preferably 1,000 N/cm or more. Thereby, the medicine package has child resistance (child-proofness).

The thickness of the outer layer 110 is not particularly limited. However, the thickness is preferably in a range of 5 µm to 300 µm, and more preferably in a range of 10 µm to 100 µm. When the thickness of the outer layer 110 is equal to the lower limit of the range or more, a desired performance can be obtained. In contrast, when the thickness is equal to the upper limit of the range or less, good workability can be obtained.

### (Adhesive layer 130)

As shown in Figures 1 to 3, the medicine packaging sheet 100 may have an adhesive layer 130 between the resin layers constituting the medicine packaging sheet in order to improve the adhesion between the resin layers.

The resin constituting the adhesive layer 130 is not particularly limited. For example, adhesive polypropylene-based resins, adhesive polyethylene-based resins, etc. can be used. Thereby, the adhesive strength between the resin layers is increased, and the delamination can be prevented.

In addition, an anchor coating agent can also be used depending on the purpose.

### (Deodorant layer 160)

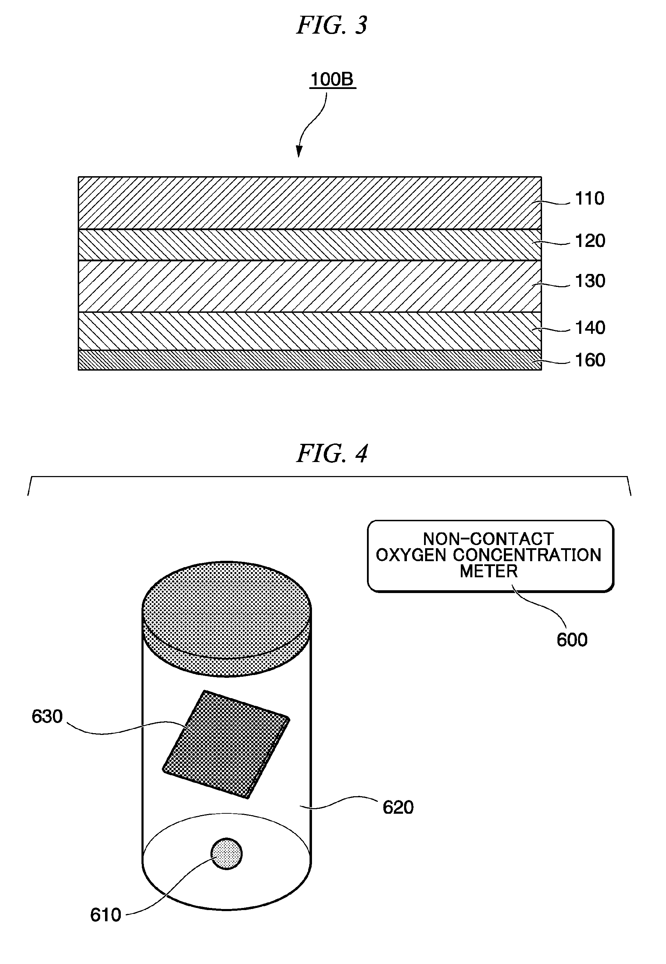

Further, the medicine packaging sheet 100 may have a deodorant layer 160 containing a deodorant, which is apart from the seal layer 150, as shown in the medicine packaging sheet 100A and 100B of Figures 2 and 3. The deodorant layer 160 can be produced by adding the chemical deodorant agent in a well-known binder resin and melt extruding.

The total thickness of the medicine packaging sheet 100 is not particularly limited. However, the total thickness of the medicine packaging sheet 100 is preferably in a range of 30 µm to 500 µm, and more preferably in a range of 50 µm to 200 µm. When the total thickness of the medicine packaging sheet 100 is less than the lower limit of the range, there is a possibility that a desirable performance cannot be obtained. In contrast, the total thickness of the medicine packaging sheet 100 is more than the upper limit of the range, and the workability may be deteriorated.

An additive, such as a nucleating agent, a petroleum resin, an antistatic agent, a lubricant, an antioxidant, an anti-blocking agent, a surfactant, a dye, a pigment, a flame retardant, and a plasticizer, can be added in at least one layer in the medicine packaging sheet 100. Thus, it is possible to impart the antistatic performance, and so on to the medicine packaging sheet 100 or the medicine package, and thereby the storage stability of the content of the medicine package can be further improved.

The preparation method of the medicine packaging sheet 100 is not particularly limited. However, for example, a feed block method in which resins, for example, which are the raw materials, are melt extruded using some extruders, a co-extrusion T-die method such as, for example, a multi-manifold method, and a water-cooling or air-cooling type co-extrusion inflation method can be used. Among these methods, the co-extrusion T-die method is excellent because of the ease of controlling the thickness of each layer.

As a sequence process, a dry lamination method, in which a monolayer or a multilayer sheet which constitutes each layer of the medicine packaging sheet 100, or the film is adhered using a suitable adhesive, an extrusion lamination method, a hot melt lamination method, a wet lamination method, a thermal (heat) lamination method, a sandwich lamination method, or a combination of two or more thereof can be used.

In addition, the layers may be laminated by a coating method or an extrusion coating method, but the method is not particularly limited. For example, a lamination method, in which the oxygen absorbing layer of a two-layer co-extruded film including the EVOH layer / the oxygen absorbing layer, and the ethylene-based film of which one side is subjected to an oxidation treatment are heat laminated, or the like can be used.

In particular, examples of a preferable method include:
a method, in which the barrier substrate having the EVOH layer, and the aluminum foil or the inorganic thin film deposited film, and the LDPE film which is subjected to a corona treatment are arranged such that the barrier layer and the treated surface of the LDPE film are faced each other; the oxygen absorbing layer including an oxygen absorbing polyester as a continuous layer is extruded between the barrier substrate and the LDPE film; and the barrier substrate, the LDPE film, and the oxygen absorbing layer are laminated by a sand lamination method; and
a method, in which using a tandem type extrusion laminator , the oxygen absorbing layer is extruded as a first layer on the barrier substrate having the EVOH layer, and the aluminum foil or the inorganic thin film deposited film; and then the LDPE layer is extruded as a second layer on the oxygen absorbing layer.

In addition, examples of a more preferable method include:
a method in which two layers of "the oxygen absorbing layer / the seal layer" or "the oxygen absorbing layer / the thermoplastic resin layer containing the deodorant" are extruded on a two-layer film of "the biaxially stretched PET film / an aluminum foil" which is formed by the dry lamination method with or without the anchor agent;
a method in which three layered products of "the oxygen absorbing layer/ the thermoplastic resin film containing the deodorant / the seal layer", "the oxygen absorbing layer/ the thermoplastic resin layer containing the deodorant / the non-adsorption layer", or "the oxygen absorbing layer/ the thermoplastic resin layer / the non-adsorption layer" is formed by the extrusion coating method with or without the anchor agent;
a method in which a multilayer film including "the biaxially stretched PET film/ the aluminum foil" and the transparent inorganic thin film deposited film are laminated on a three-layer co-extruded film of "the thermoplastic resin layer / the oxygen absorbing layer / the thermoplastic resin layer", or "the thermoplastic resin layer / the oxygen absorbing layer / the thermoplastic resin layer containing the deodorant" by the dry lamination method; and
a method in which a multilayer film including "the biaxially stretched PET film/ the aluminum foil" is laminated on a four-layer co-extruded film of "the thermoplastic resin layer / the oxygen absorbing layer/ the thermoplastic resin film containing the deodorant / the seal layer", "the thermoplastic resin layer / the oxygen absorbing layer / the thermoplastic resin layer containing the deodorant / the non-absorbing layer", or "the thermoplastic resin layer / the oxygen absorbing layer / the thermoplastic resin layer / the non-absorbing layer" by the transparent inorganic thin film deposition film-dry lamination method.

However, the production method of the medicine packaging sheet 100 is not limited to these methods.

### EXAMPLES

Below, the present invention is explained in detail referring to Examples and Comparative Examples, but the present invention is not limited to the following Examples.

Moreover, the medicine packaging sheet produced in Examples and Comparative Examples were evaluated in accordance with the following methods.

### [Confirmation of Oxygen Absorbing Performance]

As shown in Figure 4, a sample 630 which had been cut to 100 cm² was put in a sample bottle 620 having a capacity of 200 ml together with a PSt3 type sensor chip (PreSens Precision Sensing GmbH; detection limit: 0.01%) 610 for measuring the oxygen concentration, and the oxygen absorbing performance was confirmed.

### [Measurement of an Amount of Oxygen Absorbed]

Using a contactless oxygen concentration meter 600 (PreSens Precision Sensing GmbH; Part No. Fibox 3 LCD) and the sensor chip 610, the oxygen concentration was measured at 25°C.

The oxygen absorbing performance was judged as an oxygen absorbing capacity (ml/cm²) which is the amount of oxygen absorbed per unit area.

When the amount of oxygen absorbed after 10 days from the start of the measurement was 0.20 ml/cm² or more, the result is listed as "excellent", when the amount of oxygen absorbed after 10 days from the start of the measurement was less than 0.20 ml/cm², and 0.15 ml/cm² or more, the result is listed as "Good", when the amount of oxygen absorbed after 10 days from the start of the measurement was less than 0.15 ml/cm², and 0.10 ml/cm² or more, the result is listed as "Inferior", and when the amount of oxygen absorbed after 10 days from the start of the measurement was less than 0.10 ml/cm², the result is listed as "Bad".

### (Example 1)

### (Preparation of Sheet)

As a barrier layer containing a barrier material, an aluminum film including an Al layer (PET layer 12 µm/ PE layer 15 µm/Al layer 9 µm/ PE layer 15 µm) and having a total thickness of 51 µm was prepared.

As a base resin constituting an oxygen absorbing layer, a resin composition, in which 55% by weight of a metallocene LLDPE resin (Ube Maruzen Polyethylene Co., Ltd., Part Number: 145EC), 25% by weight of a LDPE resin (Ube Maruzen Polyethylene Co., Ltd., Part Number: C410), and 20% by weight of an unsaturated polyolefin-based oxygen absorbing resin were mixed, was prepared. Then, cobalt stearate was added as a reaction accelerator such that the weight ratio was adjusted to 1,000 ppm with respect to the resin composition.

As a resin constituting a seal layer, a resin composition, in which 70% by weight of a metallocene LLDPE resin (Ube Maruzen Polyethylene Co., Ltd., Part Number: 145EC), and 30% by weight of a LDPE resin (Ube Maruzen Polyethylene Co., Ltd., Part Number: C410) were mixed, was prepared.

A two-layer film of oxygen absorbing layer/ sealant layer was melt extruded at 240°C to laminate on the PE layer of the aluminum film (PET layer 12 µm/ PE layer 15 µm/Al layer 9 µm/ PE layer 15 µm). Thereby, a medicine packaging sheet of PET layer 12 µm/ PE layer 15 µm/Al layer 9 µm/ PE layer 15 µm/ oxygen absorbing layer 30µm/ sealant layer 20 µm was produced. The total thickness of the sheet was 101 µm.

The oxygen concentration after 10 days was 12.9%, and the amount of the oxygen absorbed was 0.18 ml/cm², and therefore is listed as "Good".

### (Example 2)

### (Preparation of Sheet)

As a barrier layer containing a barrier material, an aluminum film including an Al layer (PET layer 12 µm/ PE layer 15 µm/Al layer 12 µm/ PE layer 15 µm) and having a total thickness of 54 µm was prepared.

As a base resin constituting an oxygen absorbing layer, a resin composition, in which 20% by weight of a LDPE resin (Ube Maruzen Polyethylene Co., Ltd., Part Number: L518), and 80% by weight of an unsaturated polyolefin-based oxygen absorbing resin were mixed, was prepared. Then, cobalt stearate was added as a reaction accelerator such that the weight ratio was adjusted to 10,000 ppm with respect to the resin composition.

As a resin constituting a deodorant layer, a resin composition, in which 85% by weight of a LDPE resin (Ube Maruzen Polyethylene Co., Ltd., Part Number: L518), and 15% by weight of an amine-based compound carrying silicon dioxide (Toa Gosei Co., Ltd., Part Number KESMON® NS-241) which was a chemical deodorant were mixed, was prepared.

A two-layer film of oxygen absorbing layer/ sealant layer was melt extruded at 240°C to laminate on the PE layer of the aluminum film including the barrier layer (PET layer 12 µm / PE layer 15 µm /Al layer 12 µm / PE layer 15 µm). Thereby, a medicine packaging sheet of PET layer 12 µm / PE layer 15 µm /Al layer 12 µm / PE layer 15 µm / oxygen absorbing layer 15µm/ deodorant layer 6 µm was produced. The total thickness of the sheet was 75 µm.

The oxygen concentration after 10 days was 5.8%, and the amount of oxygen absorbed was 0.32 ml/cm², and therefore is listed as "Excellent".

### (Example 3)

### (Preparation of Sheet)

As a barrier layer containing a barrier material, an aluminum film including an Al layer (PET layer 12 µm / PE layer 15 µm /Al layer 12 µm / PE layer 15 µm) having a total thickness of 54 µm was prepared.

As a base resin constituting an oxygen absorbing layer, a resin composition, in which 70% by weight of a LDPE resin (Ube Maruzen Polyethylene Co., Ltd., Part Number: L719), and 30% by weight of an unsaturated polyolefin-based oxygen absorbing resin were mixed, was prepared. Then, cobalt stearate was added as a reaction accelerator such that the weight ratio was adjusted to 2,000 ppm with respect to the resin composition.

As a resin constituting a deodorant layer, a resin composition, in which 85% by weight of a LDPE resin (Ube Maruzen Polyethylene Co., Ltd., Part Number: L719), and 15% by weight of an amine-based compound carrying silicon dioxide (Toa Gosei Co., Ltd., Part Number KESMON® NS-241) which was a chemical deodorant were mixed, was prepared.

As a resin constituting a seal layer, a LDPE resin (Ube Maruzen Polyethylene Co., Ltd., Part Number: L719) was prepared.

A three-layer film of oxygen absorbing layer/deodorant layer/ sealant layer was melt extruded at 240°C to laminate on the PE layer of the aluminum film including the barrier layer (PET layer 12 µm / PE layer 15 µm /Al layer 12 µm / PE layer 15 µm). Thereby, a medicine packaging sheet of PET layer 12 µm / PE layer 15 µm /Al layer 12 µm / PE layer 15 µm / oxygen absorbing layer 25 µm / deodorant layer 10 µm/ sealant layer 11 µm was produced. The total thickness of the sheet was 90 µm.

The oxygen concentration after 10 days was 10.6%, and the amount of oxygen absorbed was 0.23 ml/cm², and therefore is listed as "Excellent".

### (Example 4)

### (Preparation of Sheet)

As a barrier layer containing a barrier material, an aluminum deposited film having an aluminum deposited PET layer (OPP layer 20 µm / VM-PET layer 12 µm / PE layer 20 µm) having a total thickness of 52 µm was prepared.

As a base resin constituting an oxygen absorbing layer, a resin composition, in which 40% by weight of a metallocene LLDPE resin (Ube Maruzen Polyethylene Co., Ltd., Part Number: 145EC), 20% by weight of a LDPE resin (Ube Maruzen Polyethylene Co., Ltd., Part Number: C410), and 40% by weight of an unsaturated polyolefin-based oxygen absorbing resin were mixed, was prepared. Then, cobalt stearate was added as a reaction accelerator such that the weight ratio was adjusted to 1,200 ppm with respect to the resin composition.

As a resin constituting a deodorant layer, a resin composition, in which 60% by weight of a metallocene LLDPE resin (Ube Maruzen Polyethylene Co., Ltd., Part Number: 145EC), 20% by weight of a LDPE resin (Ube Maruzen Polyethylene Co., Ltd., Part Number: C410), and 15% by weight of an amine-based compound carrying silicon dioxide (Toa Gosei Co., Ltd., Part Number KESMON® NS-241) which was a chemical deodorant were mixed, was prepared.

As a resin constituting a seal layer, a resin composition, in which 70% by weight of a metallocene LLDPE resin (Ube Maruzen Polyethylene Co., Ltd., Part Number: 145EC), and 30% by weight of a LDPE resin (Ube Maruzen Polyethylene Co., Ltd., Part Number: C410) were mixed, was prepared.

A three-layer film of oxygen absorbing layer/deodorant layer/ sealant layer was melt extruded at 240°C to laminate on the PE layer of the aluminum deposited film having the barrier layer (OPP layer 20 µm / VM-PET layer 12 µm / PE layer 20 µm). Thereby, a medical packaging sheet of OPP layer 20 µm / VM-PET 12 µm / PE layer 20 µm / oxygen absorbing layer 35µm / deodorant layer 8 µm / sealant layer 5 µm was produced. The total thickness of the sheet was 100 µm.

The oxygen concentration after 10 days was 6.9%, and the amount of oxygen absorbed was 0.30 ml/cm², and therefore is listed as "Excellent".

### (Example 5)

### (Preparation of Sheet)

As a barrier layer containing a barrier material, an alumina deposited film having an alumina deposited PET layer (ONY layer 20 µm/ alumina deposited PET layer 12 µm/PE layer 20 µm) having a total thickness of 52 µm was prepared.

As a base resin constituting an oxygen absorbing layer, a resin composition, in which 80% by weight of a LDPE resin (Ube Maruzen Polyethylene Co., Ltd., Part Number: L719), and 20% by weight of an unsaturated polyolefin-based oxygen absorbing resin were mixed, was prepared.

As a resin constituting a seal layer, a LDPE resin (Ube Maruzen Polyethylene Co., Ltd., Part Number: L719) was prepared.

Then, cobalt stearate was added as a reaction accelerator such that the weight ratio was adjusted to 1,000 ppm with respect to the resin composition.

A three layer film of oxygen absorbing layer/deodorant layer / sealant layer was melt extruded at 240°C to laminate on the PE layer of the alumina deposited film having the barrier layer (ONY layer 20 µm/ alumina deposited PET layer 12 µm / PE layer 20 µm). Thereby, a medicine packaging sheet of ONY layer 20 µm / alumina deposited PET layer 12 µm / PE layer 20 µm / oxygen absorbing layer 40µm / sealant layer 8 µm was produced. The total thickness of the sheet was 100 µm.

The oxygen concentration after 10 days was 9.1 %, and the amount of oxygen absorbed was 0.26 ml/cm², and therefore is listed as "Excellent".

### (Example 6)

### (Preparation of Sheet)

As a barrier layer containing a barrier material, an silica deposited film having a silica deposited PET layer (PET layer 15 µm / PE layer 15 µm / silica deposited PET layer 15 µm / PE layer 10 µm) having a total thickness of 55 µm was prepared.

As a base resin constituting an oxygen absorbing layer, a resin composition, in which 35% by weight of a metallocene LLDPE resin (Ube Maruzen Polyethylene Co., Ltd., Part Number: 145EC), 15% by weight of a LDPE resin (Ube Maruzen Polyethylene Co., Ltd., Part Number: L719), and 50% by weight of an unsaturated polyolefin-based oxygen absorbing resin were mixed, was prepared. Then, cobalt stearate was added as a reaction accelerator such that the weight ratio was adjusted to 3,000 ppm with respect to the resin composition.

As a resin constituting a seal layer, a resin composition, in which 70% by weight of a metallocene LLDPE resin (Ube Maruzen Polyethylene Co., Ltd., Part Number: 145EC), and 30% by weight of a LDPE resin (Ube Maruzen Polyethylene Co., Ltd., Part Number: L719) were mixed, was prepared.

A two-layer film of oxygen absorbing layer / sealant layer was melt extruded at 240°C to laminate on the PE layer of the silica deposited film having the barrier layer (PET layer 15 µm / PE layer 15 µm / silica deposited PET layer 15 µm / PE layer 10 µm). Thereby, a medicine packaging sheet of PET layer 15 µm / PE layer 15 µm / silica deposited PET layer 15 µm / PE layer 10 µm / oxygen absorbing layer 35µm / sealant layer 10 µm was produced. The total thickness of the film was 100 µm.

The oxygen concentration after 10 days was 11.6%, and the amount of oxygen absorbed was 0.21 ml/cm², and therefore is listed as "Excellent".

### (Example 7)

### (Preparation of Sheet)

As a barrier layer containing a barrier material, an aluminum film having an aluminum layer (PET layer 20 µm / PE layer 15 µm / Al layer 12 µm / PE layer 15 µm) having a total thickness of 62 µm was prepared.

As a base resin constituting an oxygen absorbing layer, a resin composition, in which 20% by weight of a LDPE resin (Ube Maruzen Polyethylene Co., Ltd., Part Number: L518), and 80% by weight of an unsaturated polyolefin-based oxygen absorbing resin were mixed, was prepared.

Then, cobalt stearate was added as a reaction accelerator such that the weight ratio was adjusted to 10,000 ppm with respect to the resin composition.

The resin composition for the oxygen absorbing layer was melt extruded at 240°C to laminate the oxygen absorbing layer on the PE layer of the aluminum film having the barrier layer (PET layer 20 µm / PE layer 15 µm / Al layer 12 µm / PE layer 15 µm). Thereby, a film of PET layer 20 µm / PE layer 15 µm / Al layer 12 µm / PE layer 15 µm / oxygen absorbing layer 25µm was produced.

Then, an EVOH coating liquid (Nippon Synthetic Chemical Industry Co., Ltd., Part Number: SOARNOL® solution 16DX) was coated on the oxygen absorbing layer via an adhesive layer to produce a non-absorbing layer having a thickness of 0.5 µm. Thereby, a medical packaging sheet was produced. The total thickness of the medical packaging sheet was 88 µm.

The oxygen concentration after 10 days was 14.5%, and the amount of oxygen absorbed was 0.15 ml/cm², and therefore is listed as "Good".

### (Comparative Example 1)

A medicine packaging sheet was produced in the same manner as in Example 1, except that the oxygen absorbing resin was not used.

The oxygen concentration after 10 days was 20.5%, and the amount of oxygen absorbed was 0.01 ml/cm², and therefore is listed as "Bad".

### (Comparative Example 2)

A medicine packaging sheet was produced in the same manner as in Example 1, except that the reaction accelerator was not used.

The oxygen concentration after 10 days was 20.1 %, and the amount of oxygen absorbed was 0.02 ml/cm², and therefore is listed as "Bad".

**[Table 1]**

| | Medicine Packaging Sheet | | Oxygen Absorbing Performance | | |
|---|---|---|---|---|---|
| | Weight ratio of the oxygen absorbing resin in the resin composition (% by weight) | Weight ratio of the reaction accelerator in the resin composition (ppm) | Oxygen concentration after 10 days (%) | Oxygen absorbing performance | Judgment of oxygen absorbing properties |
| Example 1 | 20 | 1,000 | 12.9 | 0.18 | Good |
| Example 2 | 80 | 10,000 | 5.8 | 0.32 | Excellent |
| Example 3 | 30 | 2,000 | 10.6 | 0.23 | Excellent |
| Example 4 | 40 | 1,200 | 6.9 | 0.30 | Excellent |
| Example 5 | 20 | 1,000 | 9.1 | 0.26 | Excellent |
| Example 6 | 50 | 3,000 | 11.6 | 0.21 | Excellent |
| Example 7 | 80 | 10,000 | 14.5 | 0.15 | Good |
| Comparative Example 1 | 0 | 1,000 | 20.5 | 0.01 | Bad |
| Comparative Example 2 | 20 | 0 | 20.1 | 0.02 | Bad |

### INDUSTRIAL APPLICABILITY

According to the present invention, it is possible to provide a medicine packaging sheet and a medicine package which have excellent oxygen absorbing properties and oxygen barrier properties. The medicine package can be used as a product which is needed to have excellent mechanical strength such as the tear strength, and therefore, as a product corresponding to the child-proofness (child resistance)

### DESCRIPTION OF REFERENCE NUMERALS

- 100, 100A, 100B: medicine packaging sheet
- 110: outer layer
- 120: barrier layer
- 130: adhesive layer
- 140: oxygen absorbing layer
- 150: seal layer
- 160: deodorant layer
- 600: contactless oxygen concentration meter
- 610: sensor chip for measuring oxygen concentration
- 620: sample bottle
- 630: cut sample

## Claims

1. A medicine packaging sheet including a barrier layer and an oxygen absorbing layer, wherein the oxygen absorbing layer is composed of a resin composition including a base resin, an oxygen absorbing resin, and a reaction accelerator.

2. The medicine packaging sheet according to Claim 1, wherein the barrier layer includes at least one selected from the group consisting of aluminum, aluminum oxide, and silicon oxide.

3. The medicine packaging sheet according to Claim 1 or 2, wherein the resin composition includes 1 to 80% by weight of the oxygen absorbing resin.

4. The medicine packaging sheet according to any one of Claims 1 to 3, wherein the amount of the reaction accelerator in the resin composition is in a range of 100 ppm to 10,000 ppm.

5. The medicine packaging sheet according to any one of Claims 1 to 4, wherein the medicine packaging sheet further includes a seal layer.

6. A medicine package including the medicine packaging sheet according to any one of Claims 1 to 5.
